# EUROPEAN PATENT APPLICATION

(11) **EP 3 406 459 A1**
(43) Date of publication of application: **28.11.2018**
(21) Application number: 17000872.6
(22) Date of filing: 22.05.2017
(51) Int. Cl.: B42D 25/47, B42D 25/455, B42D 25/46, B42D 25/29, B42D 25/36, B32B 37/12, B02C 18/00

(54) **SECURITY FEATURE FOR A DATA CARRIER**

(71) Applicant: Giesecke+Devrient Mobile Security GmbH, 81677 München (DE)
(72) Inventor: López Lebón, Lorena, 08004 Barcelona (ES)

(57) **Abstract**

The present invention is directed towards a method for providing a secured layer for a card-shaped data carrier, preferably a chipcard or a smartcard or passport. The present invention uses shredded banknotes for incorporation in card-shaped data carriers as a further security means or for providing a specific design thereof. Furthermore, the present invention is directed towards a respective layer arrangement, a multilayer card-shaped data carrier and likewise an apparatus for provision of a secured layer. Furthermore a computer program product is provided being arranged to perform the suggested method or to operate the suggested apparatus.

## Description

The present invention is directed towards a method for providing a security feature and especially a secured layer for a data carrier, preferably a chipcard, a smartcard or a passport. The present invention uses shredded banknotes for incorporation in data carriers as a further security means or for providing a specific design thereof. Furthermore, the present invention is directed towards a respective layer arrangement, a multilayer card-shaped data carrier and likewise an apparatus for provision of a secured layer. Furthermore a computer program product is provided being arranged to perform the suggested method or to operate the suggested apparatus. The data carrier is preferably a card-shaped data carrier.

WO 2016 015 872 A1 teaches a value document substrate for producing value documents, in particular banknotes. However, it is known to introduce particles or so-called flakes into a security substrate for providing specific visual effects.

WO 2004 102 490 A1 teaches a sensor for recognizing the authenticity of a luminescent security element of a valuable document. Again, particles are introduced in a carrier layer.

EP 0 184 785 B1 teaches a mechanical paper shredder for destroying sheet material, in particular banknotes that no longer fit for circulation.

US 5,039,020 A teaches a method for monitoring the destruction of thin sheets of material, including banknotes in an automatic sorting machine.
In general, it is known to introduce several security features into a smartcard or a chipcard. This includes known techniques such as the incorporation of a hologram or windows, furthermore particles or so-called flakes can be introduced in such chipcards such that visual effects are created and the authenticity of a chipcard can be evaluated. Consequently, specific particles have to be provided which are introduced into banknotes or chipcards, which reflect light in a very specific and unique way such that a reading device can detect the radiation thereby evaluating whether the reflected light corresponds to the expected light. Hence, upon detection of expected light behavior, authenticity of such a document of value can be verified.

Furthermore, it is known to introduce security features into banknotes and destroy such banknotes after circulation. In general, banknotes underlie impacts of daily use thereby getting damaged. Consequently, such damaged banknotes have to be destroyed although they still comprise valuable security features.

There is a need for secured chipcards or smartcards, which are protected against counterfeiting and still provide a pleasant design for the user. Furthermore, there is a need to introduce security features, which are cost efficient and do not imply technical effort.

Accordingly, it is an object of the present invention to provide a method for providing a secured layer for manufacturing a card-shaped data carrier, which can be created with low technical effort and which is secured against counterfeiting. Furthermore, it is an object of the present invention to provide a respective layer arrangement and a multilayer card-shaped data carrier using such a layer arrangement. Likewise it is an object of the present invention to provide an apparatus for provision of such a secured layer and furthermore to suggest a computer program product being arranged to perform the method or to operate the suggested apparatus.

The object is solved by a method for providing a secured layer according to independent claim 1. Further features are provided by dependent claims.

Accordingly, a method for providing a secured layer for a card-shaped data carrier is suggested, comprising the steps of providing a layer for manufacturing a part of the card-shaped data carrier, providing at least one part of at least one banknote, and attaching said at least one provided part to the provided layer for creating the secured layer.

The use case is to create a special card that could be offered to different type of customers to differentiate from the rest. There are several marketing possibilities for this idea: since creating cards where banknotes from different countries and denominations are mixed together, to cards where the premium cards are made only of 500 € bills while the mid user cards are made of 100 €.

The invention is based on standard smart card manufacturing technology and processes, and uses standard multilayer smart card constructions. The invention also uses standard ways to manufacture (via extrusion) plastic foils.

In the past, no one has tried to combine the two money industries in one card design: Banknotes and Payment Cards. The idea is to create a design that give the shredded banknotes a second life through payment cards at the same time creating original new designs for cards. Also the design on every single card will vary to the previously produced card. Beside shredded banknotes there could be used other particles and materials which could be applied to the card. Also in the application not only limited to the payment applications, but could also be used for loyalty cards or other plastic card applications or passports.

To increase the number of materials and designs available in the payment card industry to create cards that increase the differentiation among cards. Also the placement and positioning of the shredded banknotes or other particles on the plastic sheet is of advantage.

The method according to the present invention provides a secured layer, which can be a part of a card-shaped data carrier, for instance a chipcard or a smartcard. The provided secured layer can be laminated with further layers towards the creation of a card body. Such a layer is not merely a commonly known layer but further security features are introduced by providing at least one part of at least one banknote.

A layer is provided for manufacturing a part of the card-shaped data carrier such that at least one layer is provided regarding a further production process. Such a layer can be a foil, which is laminated with further foils. Consequently, the step of providing a layer may be used as being known in the art. The layer provides a part of the card-shaped data carrier, namely one layer out of typically several layers, which are bonded or joined together for provision of the card body.

After providing the layer, or alternatively before providing the layer, providing at least one part of at least one banknote is accomplished. A banknote in the sense of the claimed invention is any specific currency, which is provided by means of sheets. This provides the advantage that a banknote comprises security features, which are entirely or at least in part provided in the respective secured layer according to the present invention.

It may be of advantage to cut said banknote or several banknotes such that smaller parts or pieces of such banknotes result. These smaller parts or pieces can then be introduced in the provided layer for establishing a secured layer. Consequently, providing at least one part of at least one banknote comprises cutting banknotes or shredding banknotes. The result of shredding banknotes is that smaller pieces result, which might comprise specific security features, which are typically at least provided in part. In this way the security features of the banknote can be reused and there is a high effort for unauthorized personnel to provide respective banknotes. In case original banknotes are used by unauthorized personnel a very cost intensive process will result.

Once the at least one part is provided such a part or several parts can be attached to the provided layer for creating a secured layer. Accordingly, such a secured layer may itself represent the card body or may furthermore be used in combination with further, potentially unsecured layers, to be laminated or bonded towards a card body. Hence, such a secured layer may be sold as a stand-alone product or may be sold as an intermediate product for producing card bodies.

Regarding the order of the step of providing a layer or providing at least one part may be accomplished first. Consequently, there is no order on such two steps. Finally attaching said at least one provided part to the provided layer for creating the secured layer is performed. Furthermore, such process steps can be performed at the same time, for instance using co-extrusion. By means of co-extrusion a granulate is provided, which is molten. Accordingly, a layer is provided by co-extrusion and furthermore the parts of the banknote are inserted. Accordingly, attaching is performed by co-extrusion of the granulate forming a layer, the layer including the at least one part of at least one banknote. As the granulate is molten, the attaching of the part and the layer is performed in one step, namely by co-extrusion.

The technical effect is that a chipcard or a smartcard is provided, or at least an intermediate product, which has a specific design and a further security feature. The respective security feature, namely the at least one part of at least one banknote is very unique for each card as the parts may vary across several data carriers. Consequently, the size, shape, position, and/or orientation of such parts differs from data carrier to data carrier. Hence, a unique data carrier is created, which is highly secure against counterfeiting.

According to an aspect of the present invention at least two layers are provided and the provided part is attached in-between two layers. This provides the advantage that a so-called sandwiched security feature can be established by providing a first layer and a second layer and in-between those two layer the at least one part of at least one banknote is inserted. Of course, further layers can be provided around said first and said second layer. Accordingly, if the first layer and the second layer is laminated the at least one part is bonded or attached between two layers such that the positions of the introduced parts or the introduced part is fixed between both layers. It may be of advantage to provide at least one of these layers by a transparent means such that the material of at least one layer does not visually cover the at least one part. Consequently, the at least one part is visible from the outside of the secured layer such that a human being can evaluate such a security feature with the unarmed eye. It may also be of advantage to provide at least one layer such that not the unarmed eye can visually evaluate the security feature but a reading machine is arranged to evaluate the presence and features of such at least one part of at least one banknote.

According to a further aspect of the present invention attaching is performed by gluing, lamination or co-extrusion. This provides the advantage that the at least one part of the banknote or the banknotes is fixed on the provided layer such that the end product results or at least an intermediate product results towards creation of the card-shaped data carrier.

According to a further aspect of the present invention attaching comprises arranging glue on the at least one part and/or on the provided layer. This provides the advantage that it is possible to put glue either on the at least one parts of the at least one banknote or respectively place the glue on the provided layer. Finally, those alternatives can be combined such that both materials, namely the layer as well as the at least one part are provided with glue.

According to a further aspect of the present invention attaching comprises arranging glue on the provided layer by means of printing and/ or spraying. This provides the advantage that certain patterns can be created using glue and furthermore that the at least one part of the at least one banknote can be arranged on the layer to provide a specific pattern or a logo. However, the at least one part of the at least one banknote has a size which is preferably of a size, which lets the observer identify the specific pieces of the banknote. A further technical effect is provided, namely that using printing and/or spraying techniques allows the manufacturer to accomplish known steps and merely to introduce a further step of attaching the provided parts.

According to a further aspect of the present invention providing at least one part of at least one banknote comprises shredding of at least one banknote. This provides the advantage that a well-recognized security feature is provided, which has to be introduced between or respectively on a specific layer or layers. The resulting size of the pieces or parts of the banknote are preferably big enough to let the observer identify security means, which were previously implemented on the banknote. Accordingly, the step of providing at least one part of at least one banknote is in general accomplished such that the at least one part of at least one banknote comprises security features, at least in part, of the previously used banknote.

According to a further aspect of the present invention providing at least one part of several banknotes is performed using the same currency and denomination of banknotes. This provides the advantage that the used banknotes can be classified such that specific data carriers can be created. For instance a data carrier of a premium member may be created using 500 EUR banknotes. The standard member may receive a data carrier folding parts of a 100 EUR banknote. This has also a technical effect, namely that using 500 EUR banknotes is more expensive for unauthorized persons. As according to the present invention banknotes are typically used, which are sorted out anyway unauthorized personnel typically has only banknotes, which are still in use. Consequently, if the secured layer would have to be counterfeited this would result in high expenses for an unauthorized manufacturer.

According to a further aspect of the present invention attaching is performed at random positions and/or in random orientations. This provides the advantage that a unique pattern is created for each data carrier, which again increases security.

According to a further aspect of the present invention providing at least one part of at least one banknote comprises providing further particles for creating the secured layer. This provides the advantage that commonly known particles, which are not created using banknotes can be used and that several particles may they be formed by banknotes or not, can be used for establishing a high security level.

According to a further aspect of the present invention providing at least one part of at least one banknote comprising cutting at least one banknote according to a predefined or a random shape. This provides the advantage that specific designs can be created or merely random shapes are used for creating unique data carriers. A predetermined or predefined shape is for instance a star or a cross, which provides a visual effect when being inserted in a layer.

According to a further aspect of the present invention the provided layer is formed by a substrate, a foil, a sheet, a plastic material, a transparent material, a semitransparent and/or an opaque material. This provides the advantage that commonly known layers can be reused and especially that the visibility of the parts of the banknote can be adjusted.

The object is also solved by a layer arrangement for manufacturing a multilayer card-shaped data carrier, wherein two at least one provided layer at least one part of at least one banknote is attached.

The object is further solved by a multilayer card-shaped data carrier using a layer arrangement, wherein two at least one provided layer at least one part of least one banknote is attached.

The object is also solved by an apparatus for provision of a secured layer for a card-shaped data carrier, comprising means being arranged to provide a layer for manufacturing a part of the card-shaped data carrier, means being arranged to provide at least one part of at least one banknote, and means being arranged to attach said at least one provided part to the provided layer for creating the secured layer.

The object is also solve by a computer program product being arranged to perform a method in accordance with the suggested method, when being executed on a computer.

It is of advantage that the suggested method is arranged to provide the suggested layer arrangement as well as the multilayer card-shaped data carrier. Furthermore, the apparatus is able to perform the suggested method and is furthermore arranged to create the layer arrangement as well as the multilayer card-shaped data carrier. The suggested multilayer card-shaped data carrier uses the suggested layer arrangement. Consequently, both the layer arrangement, the multilayer card-shaped data carrier as well as the suggested apparatus respectively hold structural features, which conform with the suggested method steps.

The skilled practitioner will appreciate the at least one part of at least one banknote has a size, which allows the observer to identify that a banknote is used. Consequently, the banknote is merely shredded and is not of such a sized that commonly known particles result. Accordingly, at least one part of at least one banknote is at least one millimeter or more, preferably 3 or 5 millimeter or more. When referring to particles or flakes the at least one part of at least one banknote is referred to and it is preferable that such particles or flakes have a size allowing the observer to identify security features being previously part of the banknote.

Further details are provided in the context of the accompanying figures, which show:
- Fig. 1:: a layer arrangement or respectively a multilayer card-shaped data carrier according to an aspect of the present invention;
- Fig. 2:: a layer arrangement or respectively a multilayer card-shaped data carrier according to an further aspect of the present invention; and
- Fig. 3:: a flow chart depicting a method for providing a secured layer for a card-shaped data carrier according to a further aspect of the present invention.

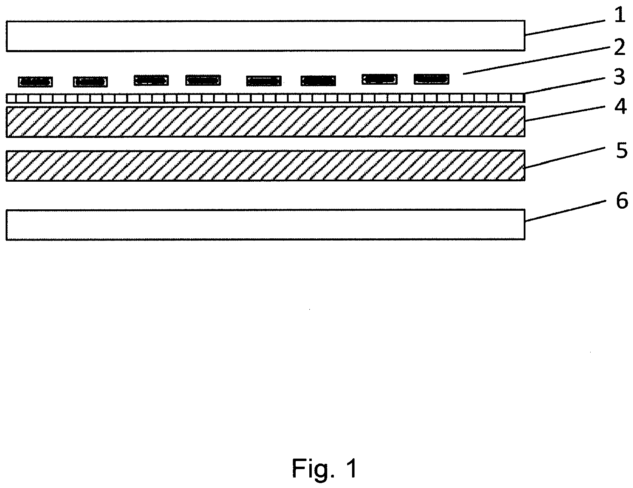

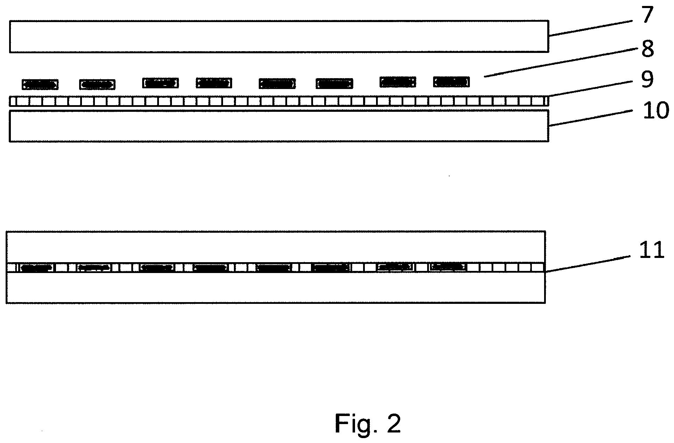

Fig. 1 and Fig. 2 both provide a layer structure, which can be used as the suggested layer arrangement as an intermediate product or can already be used as the suggested multilayer card-shaped data carrier according to the present invention. In general, a card-shaped data carrier may be provided by means of a chipcard or a smartcard or passport.

In the provided figures it is shown that the distances between the single parts of the banknotes differ throughout the provided layer. It may furthermore be the case that some of these parts overlap. In general, any arrangement regarding position and orientation of the introduced parts is possible. Furthermore, the skilled practitioner appreciates that further features may be present, which are currently not shown. For instance, electronic components, such as a processor, a coil, or memories and respective bus systems may be introduced in the smartcard. Introducing such further components can be achieved using known techniques and such a process has merely to be adapted towards the introduction of parts of banknotes. In the current examples merely separate layers are demonstrated, while such layers can likewise be created using co-extrusion resulting in already bonded layers, which comprise the parts.

The idea according to an aspect of the present invention is to use the shredded banknotes within the card construction in a way that they are visible in the card. The visible surface covered by the shredded banknotes could cover from a few flakes to the complete visible surface of the card.

For all following descriptions the expression "flakes" will be used. Flakes are shredded according to an aspect of the present invention banknotes or e.g. diamonds, tagging's, confetti in different colors or with information on it, or plastic or metal particles which could be shaped in e.g. small stars, or logos from banks or other companies.

The flakes have to be visual by recognizable from outside of the card according to an aspect of the present invention. That is why the flakes have to be covered from an transparent foil.

The card construction could be following (see figure 1): one transparent overlay 1 followed by the foil 4 with the flakes 2. This foil 4 could also have additional printed artwork on it. Followed by an opaque foil 5 on the reverse side. This opaque foil 5 could also be coated with additional flakes and optional printed artwork (not shown in the figure). Then the card is completed with an additional transparent overlay 6.

The following solutions are possible according to an aspect of the present invention.
Solution #1: the flakes are randomly distributed on the foil without any further adjustment.
Solution #2: before the placement of the flakes 2 on the foil an adhesive 3 is printed or sprayed on the foil 4 to keep the flakes on defined positions. The adhesive 3 could cover the full surface of the foil 4 or only selected areas to concentrate the flakes in defined areas on the surface.
Solution #3: the flakes are coated in advance with an adhesive according ton an aspect of the present invention which gives the flakes some stickiness to the foil.
   After the placement of the flakes according to an aspect of the present invention all foils are stacked together and laminated under heat and pressure to make the bonding between the layers. Afterwards the card are punched out and are ready for the next standard production steps.
Solution #4: in addition to solution 1-3 the idea is to make a pre-lam (see figure 2) with the flakes 8. The flakes 8 are placed as described in solution 1-3 on a transparent foil 10 without or with adhesive 9. Then a transparent overlay 7 is placed on top of the foil 10 with the flakes. This sandwich is then laminated with heat and pressure. Then the pre-lam 11 is finished and can be pre produced and be placed later on top of other card constructions.
Solution #5: Solutions 1-4 are combined or used respectively but only that the banknotes with different currency and/or different values of the banknotes. The solution would be to have banknotes only from one currency and one value of the banknote. E.g. 10 Euro is red; 100 Euro are green. So the observer could see on the finished smart card that your card was 10 Euro banknote before.

One of the contributions is to create a new card appearance where any two cards are different from each other, offering the possibility to create unique designs and patterns. Also, this invention is providing a second life to material (shredded banknotes) that was considered waste and needed to be eliminated by the banknote industry.

The provided solutions as set force above can be combined such that very unique chipcards result.

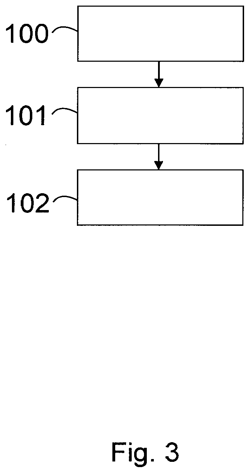

Fig. 3 shows a schematic flow diagram of a method for providing a secured layer for a card-shaped data carrier, comprising the steps of providing 100 a layer for manufacturing a part of the card-shaped data carrier, providing 101 at least one part of at least one banknote, and attaching 102 said at least one provided 101 part to the provided 100 layer for creating the secured layer. The skilled person will appreciate that the respective method steps can be performed iteratively and/or in a different order. For instance, several layers can be provided 100 and attaching 102 the at least one part of at least one banknote is performed on several layers.

It is furthermore appreciated that all suggested method steps can be performed at the same time using co-extrusion of a specific granulate such that the layer results, which includes the at least one part of at least one banknote. Preferably, the layer is provided and above the at least one part of the at least one banknote is arranged such that during a lamination process the respective parts of the banknote are sandwiched in-between two layers.

In the context of the present invention a layer refers to a specific sheet or a foil, which is a part of a card-shaped data carrier. Depending on the thickness of the layer the secured layer as such may form the card body or the secured layer may be laminated with further secured layers or respectively unsecured layers for creating a card body.

## Claims

1. A method for providing a security feature for a data carrier, comprising the steps:
- providing (100) a layer for manufacturing a part of the data carrier;
- providing (101) at least one part (2, 8) of at least one banknote; and
- attaching (102) said at least one provided (101) part (2, 8) to the provided (100) layer for creating the secured layer.

2. The method according to claim 1, **characterized in that** at least two layers are provided (100) and the provided (101) part (2, 8) is attached (102) in-between two layers.

3. The method according to claim 1 or 2, **characterized in that** attaching (102) is performed by gluing, lamination or co-extrusion.

4. The method according to any one of the preceding claims, **characterized in that** attaching (102) comprises arranging glue (9) on the at least one part (2, 8) and/ or on the provided (100) layer.

5. The method according to any one of the preceding claims, **characterized in that** attaching (102) comprises arranging glue (9) on the provided (100) layer by means of printing and/ or spraying.

6. The method according to any one of the preceding claims, **characterized in that** providing (101) at least one part (2, 8) of at least one banknote comprises shredding of at least one banknote.

7. The method according to any one of the preceding claims, **characterized in that** providing (101) at least one part (2, 8) of several banknotes is performed using the same currency and denomination of banknotes.

8. The method according to any one of the preceding claims, **characterized in that** attaching (102) is performed at random positions and/ or in random orientations.

9. The method according to any one of the preceding claims, **characterized in that** providing (101) at least one part (2, 8) of at least one banknote comprises providing further particles for creating the secured layer.

10. The method according to any one of the preceding claims, **characterized in that** providing (101) at least one part (2, 8) of at least one banknote comprises cutting at least one banknote according to a predefined or a random shape.

11. The method according to any one of the preceding claims, **characterized in that** the provided (100) layer is formed by a substrate, a foil, a sheet, a plastic material, a transparent material, a semitransparent and/ or an opaque material.

12. A layer arrangement (11) for manufacturing a multilayer data carrier, **characterized in that** to at least one provided layer at least one part (2, 8) of at least one banknote is attached.

13. A multilayer data carrier using a layer arrangement (11), **characterized in that** to at least one provided layer at least one part (2, 8) of at least one banknote is attached.

14. An apparatus for provision of a security feature for a data carrier, comprising:
- means being arranged to provide (100) a layer for manufacturing a part of the data carrier;
- means being arranged to provide (101) at least one part (2, 8) of at least one banknote; and
- means being arranged to attach (102) said at least one provided (101) part (2, 8) to the provided (100) layer for creating the secured layer.

15. A computer program product being arranged to perform a method in accordance with any one of the preceding claims 1 to 11, when being executed on a computer.
